# EUROPEAN PATENT APPLICATION

(11) **EP 2 169 955 A1**
(43) Date of publication of application: **31.03.2010**
(21) Application number: 08305586.3
(22) Date of filing: 24.09.2008
(51) Int. Cl.: H04N 7/173

(54) **Method of rendering of a presentation screen on a receiver of digital audio and video services**

(71) Applicant: Thomson Licensing, 92443 Issy-les-Moulineaux Cedex (FR)
(72) Inventor: Fresnaye, Florent, 92443 Issy-Les-Moulineaux (FR); Longet, Aurélien, 92443 Issy-Les-Moulineaux (FR); Quere, Thierry, 92443 Issy-Les-Moulineaux (FR)
(74) Representative: Huchet, Anne

(57) **Abstract**

The invention relates to the field of rendering presentation screens for digital audio and/or video receivers. More specifically, the invention relates to a method of reduction of the rendering delay needed to render a presentation page originating from a distant server.

## Description

### 1. Field of invention.

The invention relates to the field of rendering presentation screens for digital audio and/or video receivers. More specifically, the invention relates to a method of reduction of the rendering delay needed to render a presentation page originating from a distant server.

### 2. Technical background.

According to prior art, a receiver for digital audio and/or video services is connected to a network that provides services such as audio and/or video services through a service platform. An access portal server, a web page server and more specifically a HTTP (hypertext transport protocol) server is part of the service platform. The access portal proposed by the access portal server provides graphical pages and code embedded in these pages, which allow the receiver, equipped with a browser or navigator software, to use and access the services provided by the service platform. The information provided by the access portal server to the receiver comprises one or more presentation pages in a hypertext format such as HTML (Hypertext Markup Language), augmented with JavaScript code.

In order to obtain a version of the access portal, a receiver first sends a request for an access portal to the access portal server. The requested portal is constructed by the access portal server using information on the receiver and/or the receiver's user that is comprised in the request. The receiver receives one or more HTML/JavaScript pages which are then interpreted by navigator software and rendered on the receiver's screen with video/audio rendering hardware.

The preparing and the loading of the access portal as a function of the information that is comprised in the request takes some time, typically from 20 seconds to one minute, according to the handling capacity of the server serving the information, its availability, the complexity of the data to prepare, the transmission delay, the time needed to interpret the data in the receiver's navigator software and to render it on the receiver.

According to prior art, there exist methods to accelerate the fetching of presentation data such as an access portal, notably by using a method of file caching inside the receiver, where presentation data from a HTTP server is stored locally in the receiver. This allows gaining time at loading of the presentation page if the page that is needed is already stored in the local file system. During the awake state of the receiver, the data in the local file system is then updated in a way that is transparent to the user. But a file system of a typical receiver of digital audio/video services has little storage capacity and in many cases will not allow storing a complete access portal.

There also exist methods that incite the user of a receiver to update the access portal related information stored in his receiver. These methods have the inconvenience to rely on the user's willingness to update his receiver, and rely on the user's awareness of the evolution of the service platform, for example of an added or removed service or of an added or removed access right. A further inconvenience of this method is of course the delay that is needed to get and render the updated data; when the data is updated, the user waits for the update to finish, and the receiver can not render services until all data has been loaded.

Current state of the art does not propose a method that allows keeping the dynamism of refreshing the presentation data for the user frequently while keeping the access time to the data low.

### 3. Summary of the invention.

The present invention aims at alleviating the inconveniences of prior art.

In particular, the objective of the present invention is to optimize the delay of the rendering of an access portal for a receiver of digital audio and video services.

The invention relates more particularly to a method of rendering of a presentation screen on a receiver of digital audio and video services connected to a server providing information comprising data for the presentation screen, **characterized in that** the method comprises the following steps, implemented on the receiver:
Reception of a first version of the information from the server;
Rendering of a presentation screen based on the first version of the information received;
Entering a standby state, wherein no signal is coming from the video output;
After entering the standby state, reception of a second version of the information from the server;
Upon wakeup from the standby state, rendering of a presentation screen based on the second version of the information.

According to a particular embodiment of the invention, the method comprises a step of sending information to the server comprising data identifying a user of the receiver.

According to a particular embodiment of the invention, the presentation screen comprises elements giving access to audio and video services.

According to a particular embodiment of the invention, upon wakeup, the presentation screen uses the first received version when a second version has not been completely received yet.

According to a particular embodiment of the invention, the method comprises a step of replacement of the first version of the information by the second version of the information when the second version is completely received.

According to a particular embodiment of the invention, the method comprises waiting of a predetermined period of time after having entered the standby state and before receiving the second version of the information from said receiver.

According to a particular embodiment of the invention, the method comprises a step of prompting the user of the receiver with a message requesting him to update the information when the receiver is not being put to the standby state for a predetermined period of time.

According to a particular embodiment of the invention, the receiver, after having received the second version of the information, skips subsequent receptions of the second version for a predetermined period of time.

### 4. List of figures.

More advantages of the invention will appear through the description of particular, non-restricting embodiments of the invention. The embodiments will be described with reference to the following figures:
- Figure 1 shows an example network infrastructure that is compatible with the invention;
- Figure 2 shows a receiver of digital audio and video services according to a particular embodiment of the invention;
- Figure 3 shows an algorithm of a method of rendering of a presentation screen on a receiver of digital audio and video services according to the invention.

### 5. Detailed description of the invention.

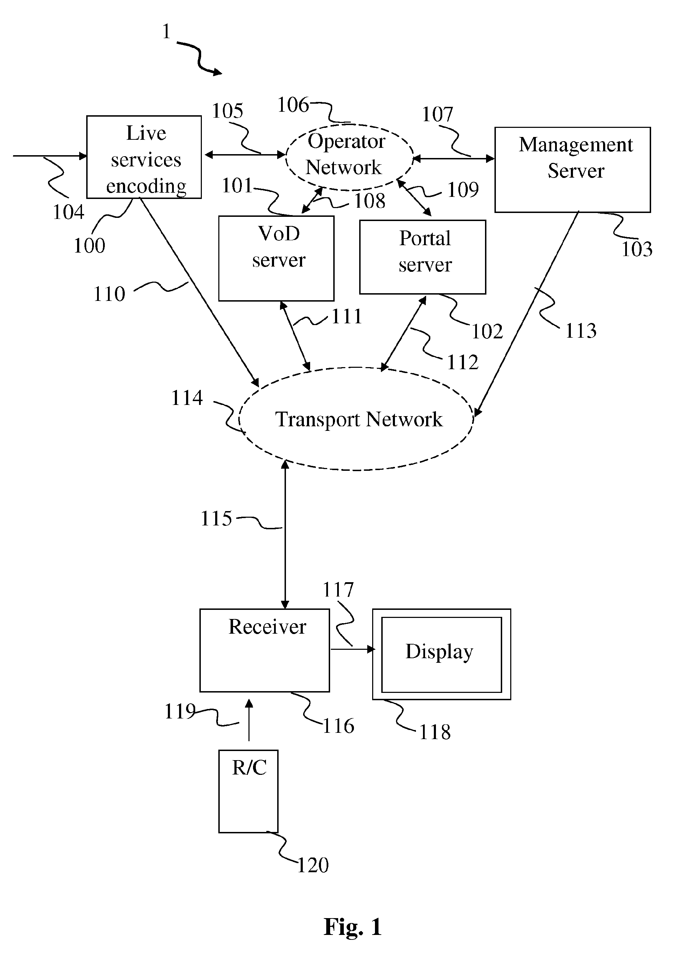

**Figure 1** shows an example network infrastructure that is compatible with the invention and that includes a receiver of digital audio/video services.

The infrastructure 1 comprises:
- a live services encoder 100;
- a Video on Demand server 101;
- an access portal server 102;
- a management server 103;
- an operator network 106;
- a transport network 114;
- a receiver 116;
- a display device 118; and
- remote control device 120.

An operator of digital audio/video services has his equipment connected to an internal network 106. The operator provides his services through a portal that is constructed by portal server 102. Services that are provided comprise live audio/video services such as broadcast television or radio programs, but also audio/video services on demand such as movies or audio tracks (e.g. mp3 files). Therefore, live services encoder 100 encodes broadcast services in a format that is suited for reception and decoding on a receiver such as receiver 116. Video on Demand server (VoD) 101 serves movies that can be requested by receiver 116 via the access portal received from server 102. Operator equipment 100, 101 and 102 are managed by management server 103. This server has functions such as access right control and billing. All this equipment is connected to the internal operator network; live services encoder 100 via connection 105, VoD server 101 via connection 108, Portal server 102 via connection 109 and management server 102 via connection 107. Furthermore, these devices are also connected to transport network 114. Live services encoder 100 via connection 110, VoD server 101 via connection 111, portal server 102 via connection 112 and management server 103 via connection 113.

Receiver 116 of digital audio/video services is connected to transport network 114 via connection 115. Receiver 116 is further connected to an audio/video rendering device 118. Receiver 116 is equipped with a remote control 120, which interfaces with the receiver via wireless connection 119.

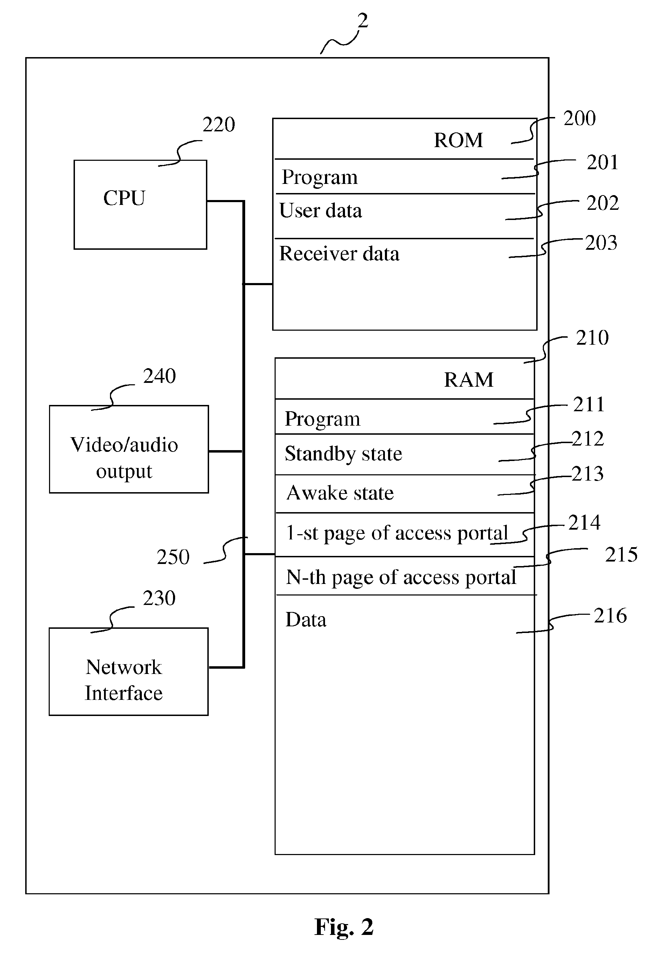

**Figure 2** illustrates a receiver 2 according a particular embodiment of the invention. The receiver corresponds for example to receiver 116 of figure 1. The receiver 2 comprises the following elements, interconnected by an address and data bus 250:
- a microprocessor 220 (or CPU, for « Central Processing Unit »);
- a non-volatile memory of type ROM (« Read Only Memory ») 200 ;
- a read-write memory or RAM (« Random Access Memory ») 210 ; and
- a network interface 230; and
- a video/audio output 240.

At power-on, the microprocessor 220 copies a program comprising the instructions of the algorithm implementing the steps of the method of rendering of a presentation screen that is stored in the ROM 200 to RAM register 211 and executes them.

The network interface 230 allows the receiver to receive and send messages and data over a network connection, such as the connection to operator network 114.

The video/audio output 240, allows the receiver to connect the receiver to a rendering device such as display 118 of figure 1.

The word « register » used in the description of memories 200 and 210 means a low-capacity memory zone (only some binary data) or a high-capacity memory zone (allowing the storage of an entire program or of a large amount of data).

Each of the registers in ROM 200 and RAM 210 can hold a variable number of data of variable size. The read-only memory 200 comprises:
- a register 201, where the program is stored;
- a register 202, in which user related data is stored;
- a register 203, in which receiver related data is stored.

The random-access memory 210 comprises:
- a register 211, used for storing the program that it is copied from ROM register 201;
- a register 212, used for storing information representative of a standby state of the receiver;
- a register 213, used for storing information representative of a awake state of the receiver; and
- a register 214, used to store data from the first page of the access portal that gives access to services such as provided by the service platform.
- a register 215, used to store data from the nth page of the access portal. Of course, as many registers may be used as needed according to the number of pages that are to be stored and available space;
- a register 216 that contains data needed for the functioning of the program stored in RAM register 211, such as temporary variables and data tables.

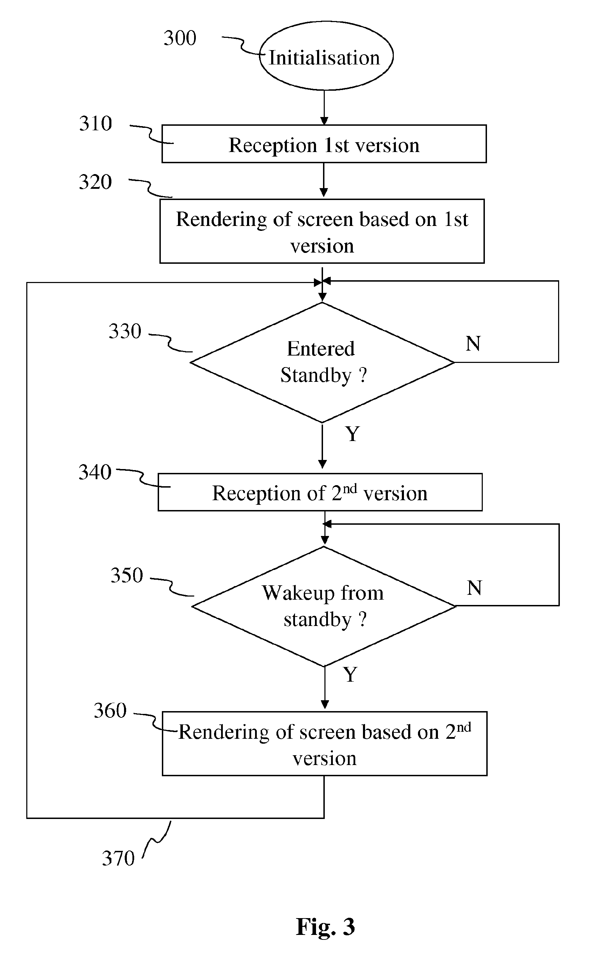

**Figure 3** shows an algorithm of rendering of a presentation screen according to a particular embodiment of the invention, such as implemented by receiver 2 of figure 2.

The CPU 220 loads the program containing the algorithm from ROM memory 200 to RAM memory 210 and starts the program. The algorithm starts with initialization step 300, where all variables needed for the algorithm are initialized.

In step 310, a first version of information comprising data for the presentation screen is received.

In step 320, a presentation screen is rendered, based on the first version of the received information.

In test 330, the receiver 2 determines if it has entered a standby state. This is for example done based on the information stored in register 212 from figure 2. If not, the test is repeated.

If the receiver 2 has entered the standby state, a second version of information comprising data for the presentation screen is received in step 340.

In test 350, receiver 2 determines if it is woken up from the standby state. This is for example done based on the information stored in register 213 from figure 2. If not, the test is repeated.

If the receiver is woken up from standby, then, in step 360, the presentation screen is rendered based on the second version of the received information.

Finally, the algorithm continues with test 330.

According to a particular embodiment of the invention, the first and second presentation screens that are received by the receiver comprise a list of services that is adapted to the user as a function of the user-identification. User identification is done by sending information comprising a user-id from the receiver to the service platform, for example stored in the user data register 202 of figure 2. A user can have particular access rights, and the list of services that is received by the receiver then takes into account these access rights. Different users have different access rights and identify themselves for example by typing an access code in one of the menus of the receiver, with the help of a remote control. This way, information is sent to the service platform, and in particular to the access portal server, that comprises data identifying a user of the receiver. This feature allows for adapting the contents of the service list to a specific user.

According to a particular embodiment of the invention, the first and second presentation screens that are received by the receiver comprise a list of services that is adapted to the receiver identification such as stored in register 203 of figure 2. This feature can be used for example for adapting a list of services to specific types of receiver or according to geographical location.

According to a particular embodiment of the invention, the receiver supports a standby state in which the functional components that are needed to update data comprising presentation screens remain active, but at least the video/audio output of the receiver is not sending any output data. This particular embodiment of the invention allows to download presentation screens in the standby state, and allows a very fast exit from the standby state to the awake state and render a presentation screen; indeed, only some functional components such as the video/audio output needs then to be switched on for the receiver to be fully operational.

According to a particular embodiment of the invention, the receiver supports at least three power states: a low-power standby state, a medium-power standby state, and an awake state. For the user of the receiver, there is no discernable difference between the low-power and the medium-power standby state. In both standby modes, at least the power to the video/audio output is cut. In the low-power standby state, the functional components that receive power comprise those that are needed to put the receiver in the medium-power standby state or directly into the awake state. In the medium-power standby state, the functional components that receive power comprise those that are needed for the reception of presentation information comprising data for presentation screens, and the components that are needed to bring the receiver from the medium-power state into the awake state, such as the remote control receiver module. In the awake state, all functional components that are needed to ensure correct functioning of the receiver receive power. This feature allows an energy-consumption friendly behavior of a receiver, while offering an optimization of the delay needed to go from one of the standby states into the awake state, and while keeping the data that comprises the presentation screens updated.

According to a particular embodiment of the invention, the receiver automatically alternates between low-power standby state and medium-power standby state, as a function of a power mode selection criterion, such as the expiration of a timer, the determination of the presence of a new, second version of information comprising data for a presentation screen, or the completion of the reception of a new second version of information comprising data for a presentation screen. This feature allows for an optimized autonomous management of the different standby states.

According to a particular embodiment of the invention, a loading of a presentation screen in the standby state that is ongoing while the receiver is put into the awake state is continued in that awake state until it is finished. This feature has the advantage to allow for one single memory storage for different versions of presentation screens, which is useful in receivers with limited memory resources.

According to a particular embodiment of the invention, the reception of a second version of information comprising data for a presentation screen is aborted when the receiver is put into the awake state. This way, the presentation screen uses the first received version when a second received version has not been completely received yet. This feature allows entering the awake state from standby state very quickly, even when in the midst of loading a new version of reception of presentation information comprising data for presentation screen, but needs a second memory resource to store the different versions, i.e. the current version and the new version.

According to a particular embodiment of the invention, a second received version of information comprising data for a presentation screen replaces a first received version of information comprising data for a presentation screen according to a selection criterion comprising the completion of the reception of the information. This way, the method according to the invention comprises a step of replacement of the first version of the information comprising data for the presentation screen by the second version when the second version is completely received. This feature allows freeing of memory space in receivers with limited memory capacity, and automatic elimination of obsolete data.

According to a particular embodiment of the invention, the receiver, after having entered the standby state, waits a predetermined period of time before receiving of the second version of information comprising data for the presentation screen. This allows being relatively sure of having a lap of time that is long enough to get the second version and to avoid interruption and aborting the reception of a second version when the user switches his receiver quickly from the standby state to the awake state.

According to a particular embodiment of the invention, the user of a receiver, not having put his receiver in the standby state for a predetermined period of time, is prompted by the receiver to update his receiver by means of a message requesting him to update. This feature allows keeping the receiver presentation screens updated, even when the user "forgets" to put his receiver from time to time into the standby state.

According to a particular embodiment of the invention, the receiver, after having updated information comprising data for a presentation screen, does not seek to update the information again before a predetermined time lap. In this way, the receiver skips subsequent receptions of second versions for a predetermined period of time. This feature allows reduction of the size of the communication traffic between the service platform and the receiver, and to reduce the load on the service platform and more particularly on the access portal server.

The reader of the present document will understand that the described embodiments are given as example embodiments of the invention, and thereby the invention is not limited to these embodiments.

The infrastructure of figure 1 is illustrated as an example embodiment. Other infrastructures are possible that are compatible with the invention, with additional or less devices; According to a particular embodiment of the invention, the operator network comprises other devices needed for its functioning: transmitter equipment, traffic management, scrambling management equipment. In a particular embodiment of the invention, other network equipment is needed comprising network switches and routers. According to a particular embodiment of the invention, a DSLAM (Digital Subscriber Line Access Multiplexer) is be present on the access network and the devices need an ADSL (Asynchronous Digital Subscriber Line) type modem, either external or internal, to connect to the transport network. According to a particular embodiment of the invention, a receiver accesses a same operator via different transport networks. According to a particular embodiment of the invention, a receiver can be of a dedicated type, comprising an STB (Set Top Box) or a more generic type comprising a PC (Personal Computer). According to a particular embodiment of the invention, the infrastructure comprises more than one receiver. According to a particular embodiment of the invention, the receiver is connected to the transport network by means of a gateway, and other receivers are connected to the gateway in what is commonly called a home network.

According to a particular embodiment of the invention, the construction of the access portal for a specific receiver by the service platform is based on information obtained from the receiver, such as user-id. The access portal is constructed according to "client data", which comprises any one of the following information, or a combination thereof: access rights to "live" or broadcast type services, access rights to video on demand type services, current position in a started VoD, time-shift position if such a feature is offered, or user preferences such as favorite channels, etc. This feature allows personalizing the look and contents of the access portal to the receivers and to the receiver's user, and allows put targeted advertisements into the access portal.

Though the invention is described using the example of HTML data with JavaScript, the invention is not limited to the use of these presentation data formats; other types of formats for building presentation screens can be used, such as CSS (Cascading Style Sheets, RFC 2318), XHTML (a World Wide Web Consortium Recommendation (W3C)), and XML (Extensible Markup Language), to name a few.

## Claims

1. A method of rendering of a presentation screen on a receiver of digital audio and video services connected to a server providing information comprising data for said presentation screen, comprising the following steps, implemented on said receiver:
- reception (310) of a first version of said information from said server;
- rendering (320) of a presentation screen based on said first version of said information received;
- entering a standby state, wherein no signal is coming from the video output;
- after entering said standby state, reception (340) of a second version of said information from said server;
- upon wakeup from said standby state, rendering (360) of a presentation screen based on said second version of said information.

2. Method according to Claim 1, **characterized in that** the method comprises a step of sending information to said server comprising data identifying a user of said receiver.

3. Method according to Claim 1 or 2, **characterized** that the presentation screen comprises elements giving access to audio and video services.

4. Method according to any of Claims 1 to 3, **characterized in that** upon wakeup, said presentation screen uses the first received version when a second version has not been completely received yet.

5. Method according to any of Claims 1 to 4, **characterized in that** the method comprises a step of replacement of said first version of said information by said second version of said information when said second version is completely received.

6. Method according to any of Claims 1 to 5, **characterized in that** the method comprises waiting of a predetermined period of time after having entered the standby state and before receiving said second version of said information from said receiver.

7. Method according to any of Claims 1 to 6, **characterized in that** the method comprises a step of prompting the user of said receiver with a message requesting him to update said information when said receiver is not being put to the standby state for a predetermined period of time.

8. Method according to any of Claims 1 to 7, **characterized in that** the receiver, after having received said second version of said information, skips subsequent receptions of said second version for a predetermined period of time.
